(19) Europäisches Patentamt

European Patent Office

Office européen des brevets

(11) **EP 1 013 518 A2**

(12) **EUROPÄISCHE PATENTANMELDUNG**

(43) Veröffentlichungstag:
   **28.06.2000  Patentblatt 2000/26**

(51) Int. Cl.[7]: **B60R 25/10**

(21) Anmeldenummer: **99124018.5**

(22) Anmeldetag: **08.12.1999**

| | |
|---|---|
| (84) Benannte Vertragsstaaten:<br>**AT BE CH CY DE DK ES FI FR GB GR IE IT LI LU MC NL PT SE**<br>Benannte Erstreckungsstaaten:<br>**AL LT LV MK RO SI**<br><br>(30) Priorität: **22.12.1998 DE 19859342**<br>   **28.07.1999 DE 19935456** | (71) Anmelder:<br>**Mannesmann VDO Aktiengesellschaft**<br>**60388 Frankfurt am Main (DE)**<br><br>(72) Erfinder: **Berberich, Reinhold**<br>**60439 Frankfurt (DE)**<br><br>(74) Vertreter:<br>**Rassler, Andrea, Dipl.-Phys.**<br>**Kruppstrasse 105**<br>**60388 Frankfurt (DE)** |

(54) **Anordnung zur Überwachung des Innenraumes eines Kraftfahrzeuges**

(57)   Die Erfindung betrifft eine Anordnung zur Überwachung des Innenraumes eines Kraftfahrzeuges, bei welchem im Fahrgastraum ein Innenraumüberwachungssensor so angeordnet ist, daß er mindestens einen Teilbereich des Innenraumes des Kraftfahrzeuges erfaßt, wobei der Sensor mit einer Auswerteelektronik verbunden ist, welche eine Signaleinrichtung ansteuert, wenn der Sensor ein Objekt in mindestens einem Teilbereich detektiert.

Bei einer Anordnung zur Überwachung des Innenraumes, bei welcher ein Fehlalarm zuverlässig verhindert wird und trotzdem eine kostengünstige Realisierung ermöglicht wird, ist die Auswerteelektronik (11) mit mindestens zwei Abstandssensoren (3, 4, 5, 6) verbunden, welche Hindernisse im Rückfahrbereich des Kraftfahrzeuges detektieren, wobei die Auswerteelektronik (11) bei Stillstand des Fahrzeuges mit dem den Fahrgastraum (29) überwachenden Innenraumsensor (7, 8, 9, 10) zur Auswertung seiner Signale und im Fahr- und/oder Parkbetrieb des Fahrzeuges (2) mit den Abstandssensoren (3, 4, 5, 6) zur Auswertung der jeweiligen Sensorsignale verbunden ist.

Fig. 1

## Beschreibung

Die Erfindung betrifft eine Anordnung zur Überwachung des Innenraumes eines Kraftfahrzeuges, bei welchem im Fahrgastraum ein Innenraumüberwachungssensor so angeordnet ist, daß er mindestens einen Teilbereich des Innenraumes des Kraftfahrzeuges erfaßt, wobei der Sensor mit einer Auswerteelektronik verbunden ist, welche eine Signaleinrichtung ansteuert, wenn der Sensor ein Objekt in mindestens dem Teilbereich detektiert.

Es sind Diebstahlsicherungseinrichtungen für Kraftfahrzeuge bekannt, welche mit Hilfe eines Ultraschallsensors den Fahrgastraum eines Kraftfahrzeuges im Stillstand des Fahrzeuges überwachen. Solche Ultraschallsensoren werden unter Anwendung eines einfachen Auswerteverfahrens (Dopplereffekt) durch Recheneinheiten mit geringer Leistungsfähigkeit betrieben. Aufgrund dieser Einschränkungen neigt eine solche Innenraumüberwachung zu Fehlalarmen.

Bedingt durch den geringen Informationsgehalt den solche Systeme aus den Ultraschallsignalen gewinnen, wird bereits ein Alarm durch den Ultraschallsensor ausgelöst, wenn die Kopfstützen innerhalb des Kraftfahrzeuges sich aufgrund einer schlechten Arretierung selbst verstellen. Manchmal reichen auch Luftblasen, die sich innerhalb des Fahrzeuginneren ausbilden, aus, um einen Fehlalarm auszulösen. Auch Schwingungen der Fahrzeugverglasung sind geeignet, bei konventionellen Geräten Fehlauslösungen zu provozieren.

Der Erfindung liegt somit die Aufgabe zugrunde, eine Anordnung zur Überwachung des Fahrzeuginnenraumes gegen unbefugte Nutzer des Kraftfahrzeuges anzugeben, bei welcher ein Fehlalarm zuverlässig verhindert wird und welche trotzdem eine kostengünstige Realisierung ermöglicht.

Die Aufgabe wird erfindungsgemäß dadurch gelöst, daß die Auswerteelektronik mit mindestens zwei Abstandssensoren verbunden ist, welche Hindernisse im Rückfahrbereich des Kraftfahrzeuges detektieren, wobei die Auswerteelektronik bei Stillstand des Fahrzeuges mit den Innenraumüberwachungssensor und im Fahr- und/oder Parkbetrieb des Fahrzeuges mit den Abstandssensoren zur Auswertung der jeweiligen Sensorsignale verbunden ist. Die Nutzung als Innenraumüberwachung erfolgt dabei vorzugsweise bei verriegeltem Fahrzeug.

Der Vorteil der Erfindung besteht darin, daß auf zwei separate Steuergeräte für Einparkhilfen und Innenraumüberwachung verzichtet werden kann. Es wird ein einziges Steuergerät für beide Anwendungsfälle genutzt, was zu einer entscheidenden Kostenreduzierung führt. Durch gemeinsame Nutzung vergleichbare Funktionsblöcke in einem Gerät können beide Systeme zuverlässig betrieben werden, was eine wesentliche Reduzierung des Hardwareaufwandes nach sich zieht.

Da in beiden Fällen Ultraschallsensoren verwendet werden, ist der Schaltungsaufbau dieser Geräte hinsichtlich der Signalkettenaufbereitung der Sensorsignale, der digitalen Signalverarbeitung und dem Leistungsausgang zur Ansteuerung der Signaleinrichtung ähnlich.

Das Steuergerät, dessen Kern ein Mikrocontroller bildet, ist zur Abarbeitung der für beide Anwendungsfälle notwendigen Regel- bzw. Steueralgorithmen ausgebildet.

Vorteilhafterweise steuert die Auswerteeinrichtung in Abhängigkeit der Signale eines Fahrgeschwindigkeitssensors und/oder eines Verriegelungssensors eine Schalteinrichtung an, welche die Auswerteeinrichtung entweder mit den Abstandssensoren oder dem Innenraumüberwachungssensor verbindet. Aufgrund der Verwendung von Sensoren, die nach demselben physikalischen Prinzip arbeiten, ist eine Anpassung des Steuergerätes hinsichtlich Sensoreingang und Signalaufbereitung bei einer Umschaltung nicht notwendig. Die Schalteinrichtung kann dabei entweder hardware- oder softwaremäßig realisiert werden.

In einer Weiterbildung sind mindestens zwei, unterschiedliche Teilbereiche des Fahrzeuginnenraumes überwachende Innenraumüberwachungssensoren vorhanden, wobei die Auswerteeinrichtung die Laufzeit der Sensorsignale der Abstands- oder Innenraumüberwachungssensoren zwischen Aussendung und Empfang des Signales überwacht. Der Einsatz der Ultraschallsensoren im Fahrzeuginnenraum ermöglicht den Einsatz von billigeren Sensoren, da z. B. ein Spritzwasserschutz, wie er für die Abstandssensoren notwendig ist, nicht erforderlich ist.

In einer Ausgestaltung wertet die Auswerteelektronik die Signale immer zweier Abstandssensoren bzw. zweier Innenraumüberwachungssensoren nach einem gemeinsamen Auswerteverfahren aus, wobei beide Sensoren ein Signal abgeben, welches von dem Hindernis reflektiert wird und das reflektierte Signal von dem das Signal aussendenden Sensor und dem jeweils anderen Sensor empfangen wird. Aufgrund dieses hochgenauen Verfahrens, wie es üblicherweise für Rückfahreinrichtungen genutzt wird, ist es möglich, den Innenraum des Kraftfahrzeuges zuverlässig auf einen Einbruch zu überwachen und Fehlalarme zu verhindern.

Vorteilhafterweise kommuniziert die Auswerteelektronik über geeignete Schnittstellen mit signalausgebenden Einheiten (z.B. Diebstahlwarnanlagen oder Signalhorn) und fahrzeugbetriebsmodusüberwachenden oder - bestimmenden Einheiten (z. B. Motorelektronik oder Zentralverriegelung sowie sicherheitsrelevanten Einheiten (wie Airbag-Steuerungen).

In einer einfachen Ausgestaltung der Erfindung steuert die Auswerteelektronik bei und/oder kurz vor Fahrantritt und/oder zyklisch während des fahrbetriebes die die Belegung der Sitzplätze im Fahrzeug prüfenden sicherheitsrelevanten Einheiten an und meldet den erkannten Status an ein Steuergerät dieser Einheiten.

Die Erfindung läßt zahlreiche Ausführungsformen zu. Eine davon soll anhand der in der Zeichnung dargestellten Figuren näher erläutert werden.

Es zeigt:

Figur 1:     Anordnung zur Überwachung des Abstandes zwischen einem Hindernis und einem Kraftfahrzeug sowie des Innenraumes des Kraftfahrzeuges.

Figur 2:     Blockschaltbild zur Ansteuerung eines Ultraschallsensors.

Figur 3:     Signalverlauf des Sensorsignales.

Für gleiche Merkmale werden gleiche Bezugszeichen verwendet.

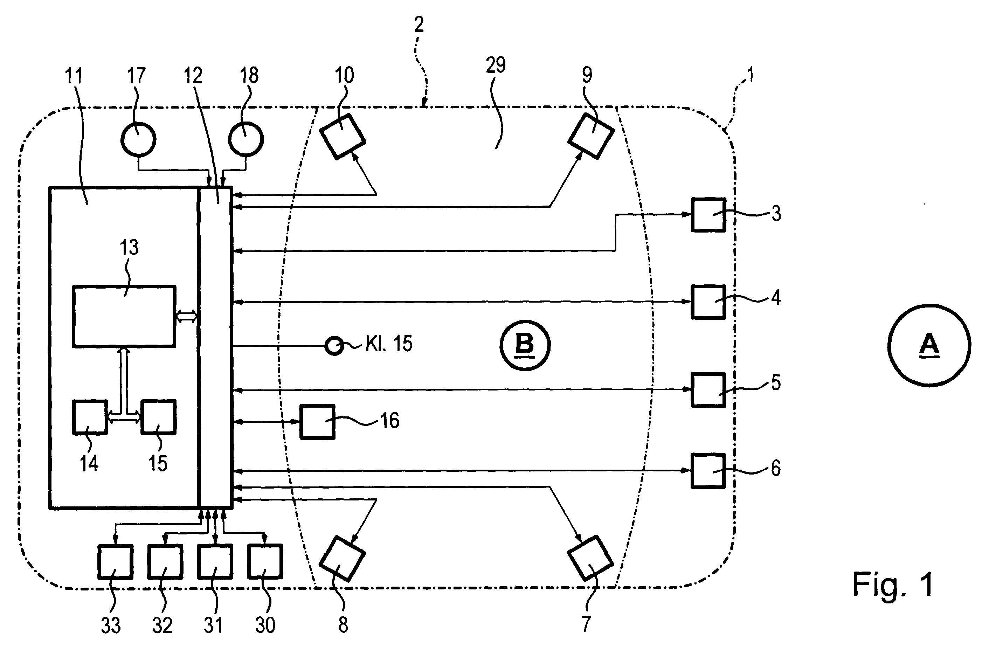

Gemäß Figur 1 sind an der rückseitigen Stoßstange 1 des Kraftfahrzeuges 2 vier Ultraschallwandler 3, 4, 5, 6 in solchen Abständen angeordnet, daß der rückwärtige Kraftfahrzeugbereich vollständig und zuverlässig auf Hindernisse A detektiert werden kann. Vorzugsweise wird ein gleichmäßiger Abstand der Sensoren gewählt. Eine solche Anordnung wird als Rückfahr- und Einparkhilfe genutzt. Die Ultraschallwandler 3 und 6 sind dabei annähernd am Randbereich der Stoßstange 1 montiert.

Im Kraftfahrzeuginnenraum sind weitere Ultraschallwandler 7, 8, 9, 10 vorhanden, welche zur Überwachung der Innenraumdiagonalbereiche in den Eckpunkten des Fahrgastraumes angeordnet sind. Alternativ kann eine aus mehreren Sensoren bestehende Innenraumüberwachungssensorik, welche nicht weiter dargestellt ist, zentral am Dachhimmel montiert werden.

Alle verwendeten Piezo-Ultraschallgeber 3, 4, 5, 6 bzw. 7, 8, 9, 10 arbeiten sowohl als Sender als auch als Empfänger. Eine im Kraftfahrzeug angeordnete Steuereinheit 11, welche vorzugsweise ein Mikroprozessor ist, ist mit der am Sensor angeordneten Elektronik jedes Ultraschallgebers 3 bis 10 verbunden. Der Mikroprozessor 11 weist dabei eine Ein- und Ausgabeeinheit 12, eine Zentralrecheneinheit 13 sowie einen Arbeitsspeicher 14 und einen Festwertspeicher 15 auf.

Die Steuereinheit 11 ist mit einer Anzeigeeinrichtung 16 verbunden, welche üblicherweise ein Lautsprecher und/oder eine optische Einrichtung ist, die bei Erkennung eines Hindernisses ein Warnsignal abgibt.

Die Steuereinheit 11 ist weiterhin an einen Drehzahlsensor 17 zur Feststellung der Fahrgeschwindigkeit des Kraftfahrzeuges 2 angeschlossen. Außerdem ist die Ein- und Ausgabeeinheit 12 mit einem Verschließsensor 18 verbunden, welcher angibt, ob die Zentralverriegelung des Kraftfahrzeuges aktiviert oder deaktiviert ist. Darüber hinaus ist die Steuereinheit 11 mit Klemme 15 des Kraftfahrzeuges verbunden, um zu detektieren, ob das elektrische System des Kraftfahrzeuges 2 ein- oder ausgeschaltet ist. Über die Ein- und Ausgabeeinheit 12 ist die Steuereinheit 11 mit einer Diebstahlwarnanlage 30, einer Zentralverriegelung 31 einer Motorsteuerelektronik, 32 sowie einem Airbag-Steuergerät 33 verbunden.

Die Umschaltung zwischen den Abstandssensoren 3 bis 6 und den Innenraumsensoren 7 bis 10 wird dabei in Abhängigkeit von den Signalen des Drehzalsensors 17 und des Verschließsensors 18 von der Recheneinheit 13 softwaremäßig gesteuert. Alternativ können aber auch entsprechende Schalter in den Leitungen zu den einzelnen Sensoren 3 bis 10 angeordnet sein, die von der Steuereinheit 11 geöffnet und geschlossen werden, je nach dem, ob die Einparkhilfe oder die Innenraumüberwachung aktiviert werden soll.

Die im folgenden beschriebene Sensorelektronik und das Auswerteverfahren ist für alle Ultraschallsensoren 3, 4, 5, 6, 7, 8, 9, 10 identisch. Im weiteren wird sich daher nur auf die Elektronik des Sensors 3 beschränkt.

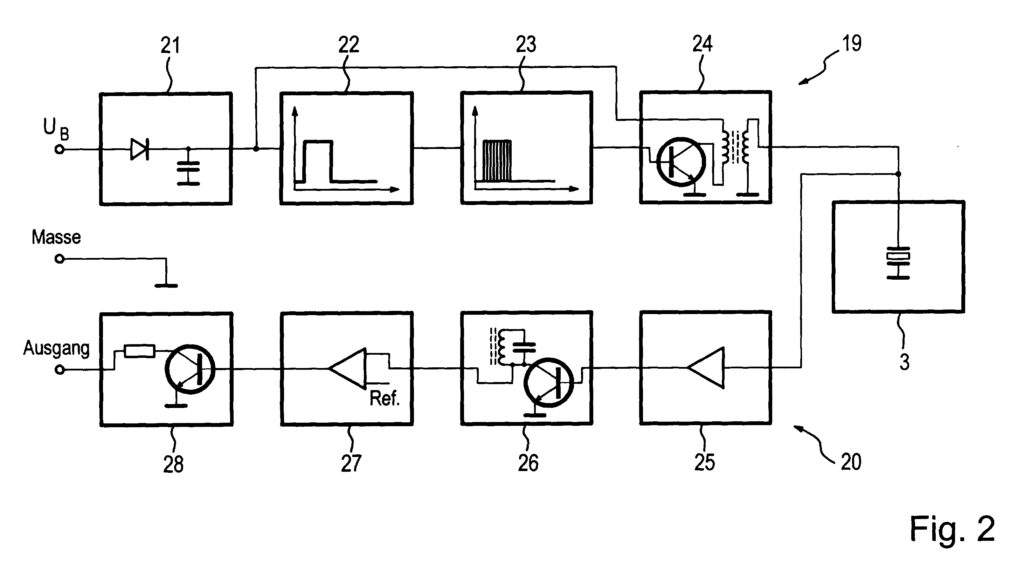

Wie Figur 2 zu entnehmen ist, weist die Sensorelektronik eine Sendeeinheit 19 und eine Empfangseinheit 20 auf. Die Sendeeinheit 19 erzeugt auf Anforderung durch das Steuergerät 11 eine Frequenzpuls mit für den piezoelektrischen Wandler 3 geeigneter Frequenz und Amplitude. Die Anforderung des Steuergerätes 11 wird an eine Eingangsschutzeinrichtung 21 geführt, wobei die Sendeanforderung des Steuergerätes 11 durch einen kurzen Spannungseinbruch der Versorgungsspannung $U_B$ des Sensors 3 realisiert wird. Von, dieser Sendeanforderung wird ein Zeitglied 22, insbesondere ein Monoflop, getriggert, welches mit der Eingangsschutzeinrichtung 21 verbunden ist.

Die Frequenzpulserzeugung selbst erfolgt in einer Oszillatorschaltung 23, vorzugsweise einem RC oder Quarz-Oszillator mit einer Arbeitsfrequenz, die an die Resonanzfrequenz des Ultraschallwandlers 3 angepaßt ist. Bei Freigabe durch das Zeitglied 22 wird die erzeugte Frequenz auf eine Sendeendstufe 24 weitergeleitet.

Die Sendeendstufe 24 besteht aus einer transistorisierten Endstufe mit nachgeschaltetem Übertrager. Die Endstufe kann als Open-Kollector-Endstufe oder als Gegentaktendstufe ausgeführt sein, wobei die Verwendung einer Gegentaktendstufe durch besseren Wirkungsgrad vorteilhaft ist.

Der Ausgangsübertrager transformiert die Ausgangsspannung der Transistorendstufe auf einen höheren Wert, um die Sendeleistung des Ultraschallsensors 3 zu erhöhen.

Die Empfangseinheit 20 besteht aus einer rauscharmen Transistorstufe 25, einer Selektiv-Verstärkerstufe 26, einer Komparator-Schaltung 27 sowie einer Ausgangsstufe 28 mit Digitalisierung.

Die Transistorstufe 25 nimmt eine rauscharme Vorverstärkung der von dem Ultraschallwandler 3 empfangenen Echosignale vor. Der Transistorstufe 25 vorgeschaltet ist eine Spannungsbegrenzung, die eine Zerstörung bzw. starke Übersteuerung der Vorstufe durch die während dem Sendeimpuls am Piezo-Schwinger 3 anliegende Spannung verhindert.

Der sich an die Transistorstufe 25 anschließende Selektiv-Vorverstärker 20 nimmt eine weitere Verstärkung des Echosignales vor. Diese Verstärkung ist frequenzselektiv ausgeführt, was zu einer besseren Störgeräuschunterdrückung führt. Diese Selektivstufe ist vorzugsweise mit einem LC-Selektivkreis oder mit RC-T-Filtern (π-Filtern) ausgeführt. Die Mittelfrequenz des Selektivkreises 26 ist an die Sendefrequenz (Arbeitsfrequenz) des Ultraschallwandlers 3 angepaßt.

Der Ausgang der Selektiv-Verstärkerstufe 26 führt auf eine Komparatorstufe 27, welche die so verstärkten Echosignale mit einem definierten Wert vergleicht, so daß nur relevante Signale zur Digitalisierung gelangen. Die Komparatorstufe 27 ist mit einer dem Echosignal nachgeführten Schaltschwelle REF aufgebaut, was zu einer besseren Detektierung von Objekten im Nahbereich des Ultraschallwandlers 3 führt.

Eine Ausgangsstufe 28 erzeugt aus den Signalen der Komparatorstufe 27 digitale Signale und stellt diese Signale über eine geeignete Schnittstelle (oben Kollektor) an das Steuergerät 11 im Kraftfahrzeug 2 zur Verfügung.

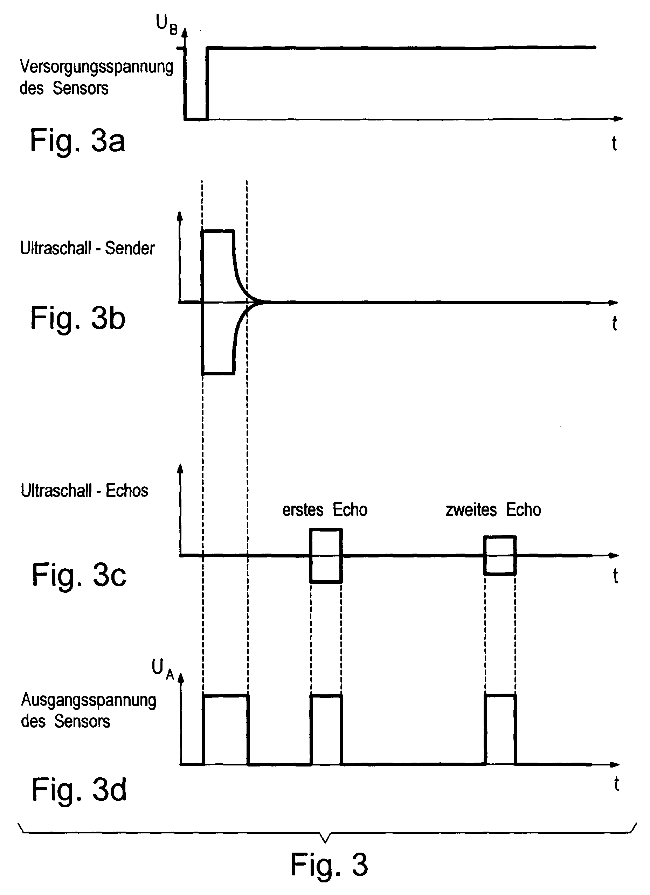

Mit Hilfe von Figur 3 soll die Funktionsweise der erfindungsgemäßen Schaltungsanordnung am Signalverlauf erläutert werden.

Eine an dem Ultraschallsensor 3 konstant anliegende Versorgungsspannung $U_B$ fällt aufgrund der Sendeanforderung durch das Steuergerät 11 im Kraftfahrzeug 2 kurzzeitig ab (Figur 3a). Am Ultraschallwandler 3 wird auf die rückwärtige Flanke des Abfalls der Versorgungsspannung $U_B$ ein Impuls erzeugt und ausgesendet (Figur 3b).

Gemäß Punkt C werden vom Ultraschallsensor 3 die vom Hindernis A reflektierten Echos in Form von Impulsen empfangen und an die Empfangsschaltung 20 weitergegeben. An dem Ausgang des Sensors 3 liegt ein digitales Signal an (Figur 3d), welches trotz unterschiedlicher Amplitude der Echoimpulse des empfangenen Signales ein konstantes Niveau aufweist. Im Steuergerät 11 des Kraftfahrzeuges 2 wird aus der Laufzeit der Vorderflanke des ersten Ausgangssignals des Sensors 3 und der Vorderflanke des Echosignals des Sensors 3, der Abstand des Hindernisses A zum Kraftfahrzeug K berechnet.

Das Steuergerät 11 steuert dabei nacheinander alle Ultraschallsensoren an und vergleicht dabei die durch die direkte Messung (der das Signal aussendende Sensor empfängt das reflektierte Signal) und die durch eine indirekte Messung (ein zweiter Sensor empfängt das, von einem ersten Sensor ausgesandte und dem Objekt reflektierte Signal) gewonnenen Meßdaten. Bei der indirekten Messung würde beispielsweise die Zeitdauer zwischen der Vorderflanke des ersten Ausgangssignales des Sensors 3 und der Vorderflanke des Echos des Sensors 4 gemessen.

Das Verfahren arbeitet wie folgt:

Bei der indirekten Messung ergibt sich die Laufstrecke aus der Gleichung s = v x t.

Für alle so ermittelten Positionen ergibt sich eine elliptische Anwesenheitskurve, während die Positionen, welche durch die direkte Messung detektiert wurden, eine kreisförmige Anwesenheitskurve ergeben. Bei der direkten Messung ergibt sich der Abstand aus $s = \frac{1}{2} v t^2$.

Nur die Objekte, welche im Schnittpunkt zweier kreisförmiger Anwesenheitskurven und einer elliptischen Kurve liegen werden als reale Objekte erkannt.

Um eine minimale Auswertezeit für ein genaues Ergebnis der Abstandsmessung zu ermöglichen, bestimmt das Steuergerät 11 aus den Meßdaten in einem ersten, sehr genauen Auswerteverfahren übereinstimmende Positionen und ermittelt anschließend aus dem verbliebenen unverifizierten Meßdaten in einem zweiten, weniger genauen Auswerteverfahren weitere übereinstimmende Positionen. Durch die Mehrfachauswertung der in einem einzigen Meßvorgang generierten Meßdaten werden sehr genaue Meßergebnisse erzielt.

In einer Ausgestaltung ermittelt das Steuergerät 11 aus den Meßdaten in einem ersten Auswerteschritt die durch mindestens 3 Laufzeitmessungen bestimmten Positionen des Objektes, wobei für die Position des Objektes die durch alle drei Laufzeitmessungen erfaßt wurden, der Abstand bestimmt wird. Anschließend wird in einem zweiten Auswerteschritt aus allen, im ersten Auswerteschritt unberücksichtigten Meßdaten die durch mindestens zwei Laufzeitmessungen bestimmten Positionen des Objektes bestimmt und aus der durch beide Laufzeitmessungen erfaßten Positionen der Abstand bestimmt, wobei in einem dritten Auswerteschritt, aus den im zweiten Auswerteschritt unberücksichtigten Meßdaten der Abstand aus einer durch eine einfache Laufzeitmessung ermittelte Position bestimmt wird.

Bei dem Auswerteschritt mit drei Laufzeitmessungen handelt es sich um die Kombination direkte Messung, direkte Messung, indirekte Messung oder indirekte Messung, indirekte Messung, direkte Messung.

Der zweite Auswerteschrill zur Überwachung von zwei Laufzeitmessungen umfaßt eine direkte und eine indirekte Messung, während der dritte Auswerteschritt entweder eine direkte oder eine indirekte Messung umfaßt.

Dieses Auswerteverfahren, welches insbesondere für Rückfahrhilfen gedacht ist, ist auch einfach zur Überwachung des Innenraumes eines Kraftfahrzeuges einsetzbar. Dabei werden auch bei der Innenraumüberwachung immer zwei Sensoren gleichzeitig durch das Steuergerät 11 überwacht. Hier ist es aber ausreichend, wenn dies Meßverfahren der Stufe 2, wo sowohl eine direkte und eine indirekte Messung miteinander verglichen werden, angewendet wird.

Aufgrund dieser Anordnung kann die hochgenaue Auswertemethode für Abstandssensoren modifiziert auch zur Innenraumüberwachung eingesetzt werden. Das zuvor beschriebene Verfahren ist prinzipbedingt weitaus robuster gegen Störgrößen als konventionelle Innenraumüberwachungssysteme nach dem Dopplerverfahren.

**Patentansprüche**

1. Anordnung zur Überwachung des Innenraumes eines Kraftfahrzeuges, bei welcher im Fahrgastraum ein Sensor so angeordnet ist, daß er mindestens einen Teilbereich des Innenraumes erfaßt, wobei der Sensor mit einer Auswerteelektronik verbunden ist, welche eine Signaleinrichtung ansteuert, wenn der Sensor ein Objekt in mindestens dem Teilbereich detektiert, **dadurch gekennzeichnet**, daß die Auswerteelektronik (11) mit mindestens zwei Abstandssensoren (3, 4, 5, 6) verbunden ist, welche Hindernisse (A) im Rückfahrbereich des Kraftfahrzeuges detektieren, wobei die Auswerteelektronik (11) bei Stillstand des Fahrzeuges mit dem, den Fahrgastraum (29) überwachenden Innenraumsensor (7, 8, 9, 10) zur Auswertung seiner Signale und im Fahr- und/oder Parkbetrieb des Fahrzeuges (2) mit den Abstandssensoren (3, 4, 5, 6) zur Auswertung der jeweiligen Sensorsignale verbunden ist.

2. Anordnung nach Anspruch 1, **dadurch gekennzeichnet,** daß die Auswerteeinrichtung (11) in Abhängigkeit der Signale eines Fahrgeschwindigkeitssensors (17) und/oder eines Verriegelungssensors (18) eine Schalteinrichtung (12) ansteuert, welche die Auswerteeinrichtung (11) entweder mit den Abstandssensoren (3, 4, 5, 6) oder dem Innenraumüberwachungssensor (7, 8, 9, 10) verbindet.

3. Anordnung nach Anspruch 2, **dadurch gekennzeichnet**, daß mindestens zwei, unterschiedliche Teilbereiche des Fahrzeuginnenraumes (29) überwachende Innenraumsensoren (7, 8, 9, 10) vorhanden sind, wobei die Auswerteeinrichtung (11) die Laufzeit der Sensorsignale der Abstands- (3, 4, 5, 6) oder Innenraumüberwachungssensoren (7, 8, 9, 10) zwischen Aussendung und Empfang des Signals überwacht.

4. Anordnung nach Anspruch 3, **dadurch gekennzeichnet**, daß die Auswerteelektronik (11) die Signale immer zweier Abstandssensoren (3, 4, 5, 6) bzw. zweier Innenraumüberwachungssensoren (7, 8, 9, 10) nach einem gemeinsamen Auswerteverfahren auswertet, wobei beide Sensoren ein Signal abgeben, welches von dem Hindernis (A, B) reflektiert wird und das reflektierte Signal von dem das Signal aussendenden Sensor und dem jeweils anderen Sensor empfangen wird.

5. Anordnung nach Anspruch 1, **dadurch gekennzeichnet**, daß die Auswerteelektronik (11) über eine Schnittstelle (34) mit signalgebenden Einheiten(16, 30) und/oder fahrzeugbetriebsmodusüberwachenden bzw. -bestimmenden Einheiten (31, 32) und/oder sicherheitrelevanten Einheiten (33) verbunden ist.

6. Anordnung nach Anspruch 5 **dadurch gekennzeichnet**, daß die Auswerteelektronik (11) bei und/oder kurz vor Fahrtantritt und/oder zyklisch während des Fahrbetriebes die mit den sicherheitsrelevanten Einheiten (33) ausgerüsteten Sitzplätze im Fahrzeug auf Belegung überprüft und den erkannten Belegungstatus an ein Steuergerät dieser Einheit (33) meldet.

Fig. 1

EP 1 013 518 A2

Fig. 2

$U_B$

Versorgungsspannung
des Sensors

## Fig. 3a

t

Ultraschall - Sender

## Fig. 3b

t

Ultraschall - Echos

erstes Echo        zweites Echo

## Fig. 3c

t

$U_A$

Ausgangsspannung
des Sensors

## Fig. 3d

t

## Fig. 3